# EUROPEAN PATENT SPECIFICATION

(11) **EP 1 312 514 B1**
(45) Date of publication and mention of the grant of the patent: **26.10.2005**
(21) Application number: 02025880.2
(22) Date of filing: 19.11.2002
(51) Int. Cl.: B60R 21/01, B60R 22/46

(54) **Method and device for determining the load on a vehicle occupant**
Verfahren und Vorrichtung zur Bestimmung der auf einen Fahrzeuginsassen einwirkenden Last
Procédé et appareil pour déterminer les efforts agissant sur un passager d'un véhicule

(30) Priority: 20.11.2001 DE 10156837
(43) Date of publication of application: 21.05.2003
(73) Proprietor: KEY SAFETY SYSTEMS, INC., Sterling Heights, Michigan 48314 (US)
(72) Inventor: Specht, Martin, 82340 Feldafing (DE)
(74) Representative: Nöth, Heinz

(56) References cited:
- WO-A-99/12778
- WO-A-02/062631
- DE-A- 19 902 483
- US-A- 5 969 598

## Description

The invention relates to a method for determining the load acting on a vehicle occupant restrained by a seat belt according to the preamble of claim 1 and a vehicle occupant restraint system according to the preamble of claim 10.

From DE 199 02 483 A1 a method according to the preamble of claim 1 is known, wherein to adjust the restraining force as a function of signals obtained from scanning of the movement of the belt webbing influenced by the strapped-in vehicle occupant the signals are fed to an evaluating device.

US-A-5 718 451 discloses a vehicle occupant restraint system for a vehicle with a belt retractor for a seat.belt according to the preamble of claim 10. The known system includes a tightener drive, the drive moment of which is transmitted by a shaft to the belt reel of the belt retractor, wherein a rotational angle sensor scans the rotational angle of the rotor and the measurement data from the rotational angle sensor are supplied to an evaluation device.

WO99/51469 discloses a vehicle occupant restraint system for a vehicle with a belt retractor for a seat belt which includes a tightener drive. The drive moment of the tightener drive is transmitted by a rotor to the belt reel of the belt retractor.

The object of the invention is to provide a method and a system of the above mentioned type in which the function of the method and of the system may be diagnosed.

The object is achieved by the characterizing features of claim 1 for the method and by the characterizing features of claim 10 for the system.

According to the invention, in addition to scanning the webbing movement, in particular the rotating movement of the belt reel, the rotating movement, in particular rotational angle position, of a rotor is scanned, by which a torque generated by an electrical drive, in particular an electric motor, is transmitted to the belt reel of the seat belt retractor, wherein a corresponding measurement signal is fed to the evaluating device. The rotor, whose rotating movement or rotational angle position is scanned, is preferably the rotor of the electric motor generating the torque to be transmitted to the belt reel. It may also comprise a rotor arranged between the electrical drive, in particular the electric motor, and the belt reel, via which rotor the torque is transmitted to the belt reel, optionally via an engageable and disengageable clutch.

By the combined evaluation of the scanned webbing extraction movement, in particular the rotating movement of the belt reel, and the rotating movement of the rotor, monitoring of the functions of the seat belt restraint system, in particular the belt retractor, may be performed. By a corresponding comparison of the webbing movement or belt reel movement and the rotor movement, the function of the seat belt restraint system may be diagnosed.

For example, it may be detected whether, upon simultaneous belt webbing retraction by tightening and by the action of the motive spring acting on the belt reel in the belt webbing take-up direction, "overtaking" of the in particular electromotive tightener drive occurs through the action of the motive spring. This "overtaking" creates the risk that the clutch acting between the tightener drive, in particular the electromotive drive, and the belt reel will not engage properly, such that, when the motive spring finishes acting, the torque supplied by the tightener drive, in particular the electric motor, is not transmitted to the belt reel and is lost. By the combined evaluation of the belt extraction movement and the rotating movement of the rotor, which transmits the torque generated for tightening, such overtaking may be detected early. The motive tightener drive may then be briefly switched off and switched on again when the clutch is properly engaged. The following diagnosis and monitoring functions are additionally provided.

After application of the seat belt, which is detected for example by electrical contacting upon insertion of the belt tongue into the belt buckle, a reference variable for the length of extracted webbing may be determined, in particular after removal of belt slack. As a function of this reference variable for the length of extracted webbing, belt slack arising during normal travel may be determined at any operating time. Excessive webbing extraction, for example if the strapped-in vehicle occupant is out of position (OOP), may be measured and detected. Locking of the belt retractor may be detected in that a change in the length of extracted webbing does not occur in the extraction direction over a given period.

Scanning of the rotating movement of the belt reel allows detection of the size of the locking path of the locking device, in particular the blocking catch, upon main locking of the belt reel during normal operation and preferably after tightening. For simplified unlocking, the belt reel is turned in the opposite rotational direction, preferably by the electromotive drive, over an angular range corresponding at least to the locking path.

Situations may be detected in which emergency locking of the belt reel of the belt retractor is necessary. Such a situation may arise when seat belt tightening starts too late and the vehicle occupant is already in the forward displacement phase. The retraction force generated by the tightener drive may be too slight in the initial phase to stop the forward displacement of the vehicle occupant. In this case, the belt webbing is drawn off the belt reel in the extraction direction despite the tightener drive being switched on. This situation may be detected by combined scanning of the rotor transmitting the tightener torque and the belt reel. To stop the forward displacement of the vehicle occupant, emergency locking of the belt reel is then activated, preferably an electromagnetically actuated catch, which blocks further rotation of the belt reel.

In conjunction with determination of the longitudinal positioning of the vehicle seat occupied by the vehicle occupant and the length of webbing extracted from the parked position, a fundamental value may be obtained for the weight of the strapped-in vehicle occupant, in particular by scanning the rotational angle of the belt reel. As a function of this fundamental value, restraint parameters may then be preset, in particular stages of the belt webbing force limiter, for example the torsion bar.

Furthermore, when a predetermined webbing extraction length is exceeded, the belt retractor may take on the function of child seat securing means or securing means for voluminous objects on the vehicle seat, in particular it may assume a preblocking state.

The invention will be explained in more detail with reference to the Figures, in which:
- Fig. 1: is a block diagram of an exemplary embodiment of a device with which the invention may be performed;
- Fig. 2A: is a graphic representation of the change over time in the rotational angle of the belt reel in a major crash;
- Fig. 2B: is a graphic representation of the change over time in the rotational angle speed of the belt reel in a major crash;
- Fig. 2C: shows the change over time in rotational angle acceleration of the belt reel in a major crash;
- Fig. 3A: is a graphic representation of the change over time in the rotational angle in a minor crash;
- Fig. 3B: is a graphic representation of the change over time in rotational angle speed in a minor crash; and
- Fig. 3C: is a graphic representation of the change over time in rotational angle acceleration in a minor crash.

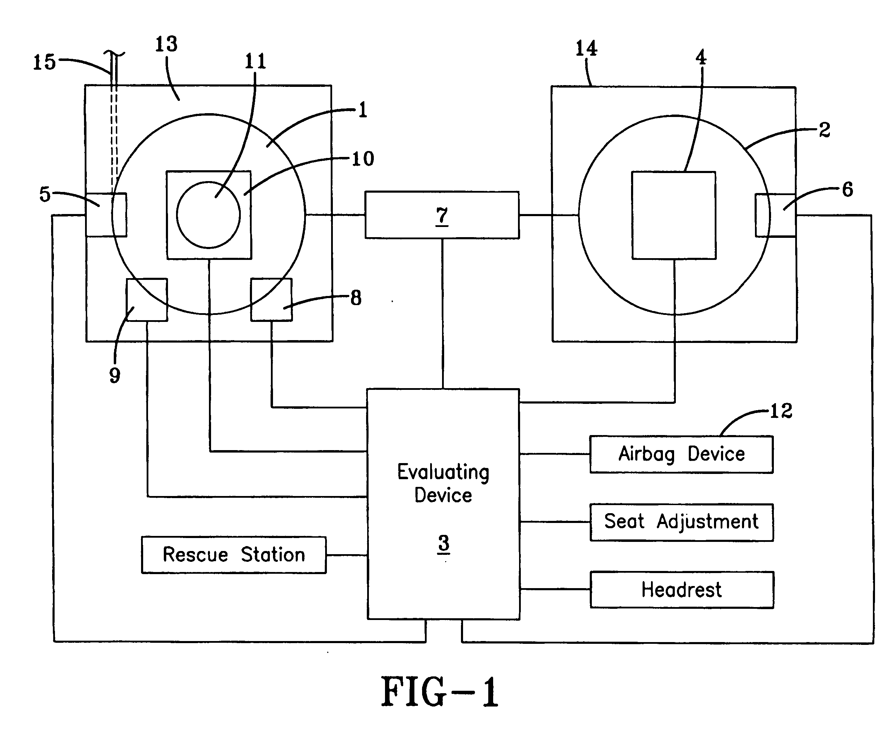

Fig. 1 shows a belt reel 1 that is arranged in a belt retractor 13, in particular of a three-point seat belt system of a motor vehicle, for retraction and extraction of a seat belt 15. Torque from a tightener drive, in particular an electric motor 14, may be transmitted to the belt reel 1 via a rotor 2. The rotor 2 is preferably the rotor of the electric motor 14, but may be a rotor arranged outside the tightener drive. A torque transmission device 7, which may take the form of a clutch, gear and the like, is located between the rotor 2 and the belt reel 1. The torque transmission device 7 may be externally controlled or automatically switchable. The torque transmission device may comprise a damping device with particular damping behaviour.

In the exemplary embodiment shown, a rotational angle sensor 5 is provided for scanning the extraction or take-up movement of the seat belt webbing (not shown in any more detail). The rotational angle sensor 5 supplies measurement signals to an evaluating device 3 that are proportional to the respective rotational angles of the belt reel 1.

A rotational angle sensor 6 is provides electrical measurement signals to the evaluating device 3 that are proportional to the respective rotational angles of the rotor 2.

The evaluating device 3 preferably takes the form of an electronic unit, which includes a microcomputer with microprocessor and associated memories. Interfaces are provided in a known manner for converting the measurement signals coming from the rotational angle sensors 5, 6 into computer-suitable formats and for converting the data coming from the microcomputer of the evaluating device 3 for actuation of peripheral devices, in particular the safety devices of the restraint system.

The evaluating device 3 may preferably be a component of a central computer unit in the motor vehicle, wherein the measurement signals of the rotational angle sensors and the signals output by the evaluating device are conveyed via the serial bus system of the vehicle, for example a CAN bus.

In determining the severity of a crash, in particular by determining the load acting on the vehicle occupant restrained by the seat belt, of the device described only the rotational angle sensor 5 for the belt reel 1, a belt force limiter 11 and the evaluating device 3 are necessary. The belt force limiter 11 is preferably so constructed that its energy-absorbing action is achieved by material deformation. The belt force limiter 11 preferably takes the form of a torsion bar, which is incorporated in a known way in the belt reel 1 (e.g. DE 199 02 483 A1, EP 1 022 201 A1).

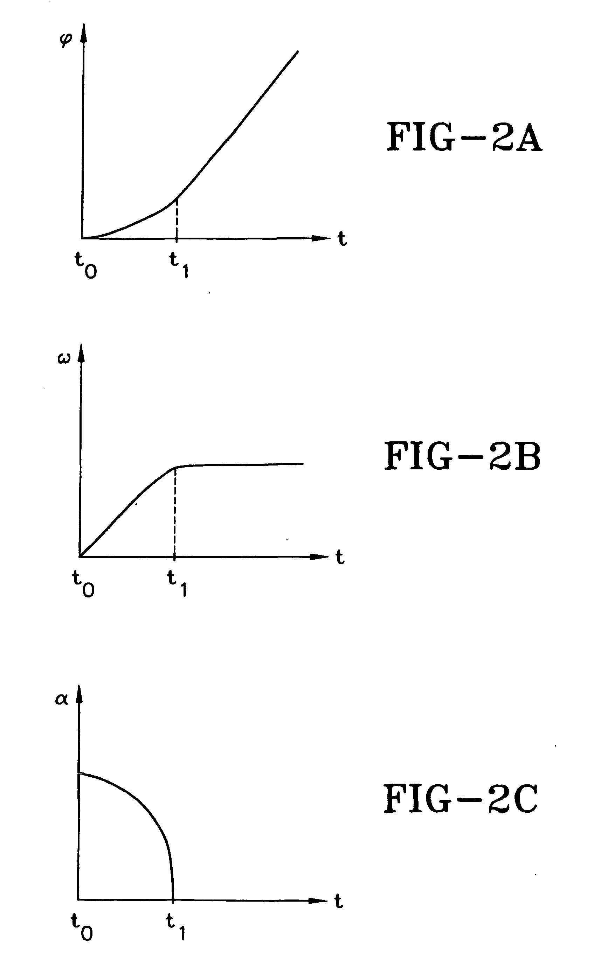

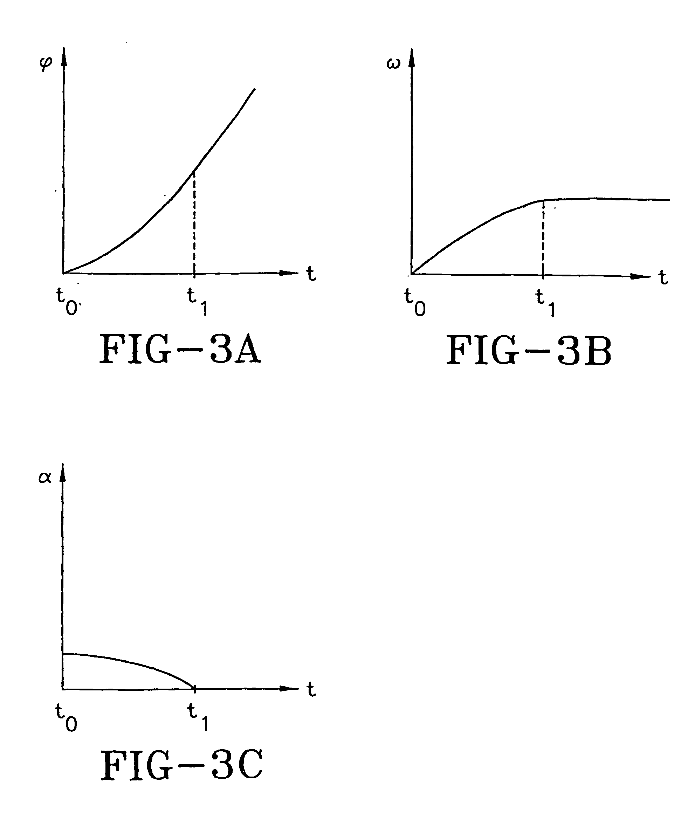

If, in a crash the vehicle occupant is displaced forwards after blocking of the blockable belt reel portion against further rotation, the vehicle occupant is restrained with a restraining force preset by the force limiter, against which restraining force the rotatable belt reel portion rotates with force-limited belt extraction. Deformation of the force limiter initially proceeds within the elastic deformation range, wherein there occurs a change over time in the rotational angle according to Figs. 2A or 3A from the time t₀ (start of belt force limiter deformation) to the time t₁ (end of elastic deformation of the belt force limiter). Deformation going beyond t₁ lies within the plastic deformation range of the belt force limiter. In the plastic deformation range, the change over time in the rotational angle of the belt reel 1 is substantially linear. Figs. 2B or 3B and 2C or 3C show the changes over time in rotational angle speed and rotational angle acceleration respectively. The rotational angle is measured by the rotational angle sensor 5 for the belt reel 1 and supplied to the evaluating device 3. The curve shown in Figs. 2A or 3A for the profile over time of the change in rotational angle is then obtained from the respective measured rotational angle values. A first differentiation then proceeds in the evaluating device 3 after the time required for detecting the change over time in the rotational angle speed in accordance with the graphic representation in Figs. 2B or 3B. From a further differentiation procedure there is then obtained the change over time in rotational angle acceleration according to Figs. 2C or 3C.

From this evaluation, in particular by comparison with stored curve profiles, the degree of severity of the crash may be determined. Appropriate curve profiles may be defined as threshold values. If these are reached or exceeded, appropriate safety devices, for example additional power tightening of the seat belt, are activated. Corresponding signals may be supplied from the evaluating device 3 to a control device 4 for the power supply of the electric motor 12. Corresponding electrical activation signals may be supplied from the evaluating device 3 to an airbag device 12, wherein a given inflation level may optionally be preset for the airbag to be activated. Seat and seat back adjustment, headrest adjustment etc. may be activated.

Fig. 2A shows the curve profile for the change over time in the rotational angle of the belt reel 1, resulting from the respective measurement signals of the rotational angle sensor 5, for a major crash. Fig. 2C shows the profile over time, resulting therefrom, of the rotational angle acceleration, which is proportional to the load exerted on the vehicle occupant by the seat belt webbing.

Fig. 3A shows the change over time in the rotational angle of the belt reel 1 in a minor crash. Fig. 3C shows the resultant change over time in rotational angle acceleration.

From the graphic representations given in Figs. 2 and 3, it is clear that a statement is obtained over the severity of the crash by the measurement signals of the rotational angle sensor 5 which scans the rotating movement of the belt reel 1. The degree of severity of the crash is preferably established within the range of elastic deformation of the energy absorber, i.e. within the period t₀ to t₁. A very early statement is then obtained about the severity of the crash. As already explained, the corresponding safety devices, such as belt tightener, airbag system and optionally seat back adjuster and headrest adjuster, are then initiated as a function thereof. This is effected by corresponding signalling by the evaluating device 3. The profiles over time of the acceleration changes according to Figs. 2C and 3C in particular show clear differences as a function of the degree of severity of the crash.

The result of crash severity determination may optionally be stored in the evaluating device 3 for transmission of these data for the initiation of appropriate rescue measures. For example, the information may be transmitted to a rescue station by telecommunication. Information about seat occupancy and thus the number of crash victims may be obtained from the respective measurement signal or from the corresponding measurement data.

With the above-described mode of operation of the exemplary embodiment, only the measurement signals of the rotational angle sensor of the belt reel 1 are required for evaluation in the evaluating device 3. As a function of these measurement signals, further functions of the belt retractor and seat belt system may be controlled and monitored. This may for example comprise the detection of a reference variable for the length of extracted belt webbing after application of the seat belt and after removal of any belt slack which may be present. Furthermore, excessive belt webbing extraction may then be detected if the vehicle occupant is out of position (OOP). During normal travel, belt slack may be measured and detected on the basis of the reference variable of the belt webbing extraction length. Locking of the belt reel may be detected due to stopped belt extraction. In connection with the longitudinal seat position and the length of webbing extracted from the parked position, it is possible to obtain a measured variable for the weight of the vehicle occupant, wherein, as a function of this measured variable, presetting of the safety devices, in particular the force limiter stage, may be performed using an adjusting device 10. If a given length of extracted belt webbing is exceeded, the belt retractor may be adjusted into a blocking readiness state, in particular a preblocking stage, for child seat restraint or for restraining a large object on the vehicle seat. This operating state may be established by an appropriate, in particular electromagnetic actuating device 9, which may act on a preblocking catch and is triggered by the evaluating device 3.

The webbing extraction speed or acceleration or the rotational angle speed or acceleration of the belt reel, which are available as electrically or electronically detected measurement data, may be used for a web sensor function. In this way, the belt retractor may be adjusted into blocking readiness, for example a preblocking stage. It is also possible to use the belt webbing sensor function for direct adjustment of the belt reel into its blocked state. In this respect, an electromagnetic actuating device may in each case be used to actuate the blocking device, in particular blocking catch.

In combination with the measurement signals of the rotational angle sensor 6, which scans the rotating movement of the rotor 2, in particular the electric motor rotor, further functions, in particular diagnostic and monitoring functions, may be obtained for the seat belt restraint system.

In the event of simultaneous interrogation of belt reel 1 and rotor 2 with regard to rotational angle, it may be established by appropriate association, in particular comparison, of the measurement signals of the two rotational angle sensors 5, 6 in the evaluating device 3, whether the belt retractor 13 is properly fulfilling the desired function. For example, it may be detected whether the torque generated by the tightener drive, in particular the electric motor 14, for tightening the belt webbing is transmitted to the belt reel 1 via the torque transmission device 7, in particular the clutch. For example, "overtaking" of the belt webbing retraction effected by the electric motor 14 by the return force acting on the belt reel 1 of the motive spring of the belt retractor 13 may be detected. In this case, the belt reel 1 rotates at a higher rotational angle speed than is achieved by the tightener drive, in particular the electric motor 14. Brief switching off may then be effected by an appropriate command to the control device 4 of the electric motor 14, such that, as the effect of the motive spring subsides or the motive spring action is ended, the electric motor 14 is started again and the torque transmission device 7 transmits the torque from the electric motor 14 to the belt reel 1 after engagement of the clutch or the like. The torque transmission device 7 may be triggered appropriately by an electrical signal from the evaluating device 3.

Emergency locking may be triggered by a signal from the evaluating device 3 supplied to an emergency locking device 8, if, when the electric motor 14 is switched on, the belt reel 1 is turned in the belt extraction direction to tighten the seat belt. The emergency locking device 8 may comprise an electromagnetic actuator, which acts on the main locking catch for the belt reel 1.

To simplify unlocking of the belt reel, an unlocking signal may be supplied to the control device 4 of the electric motor 14, such that the belt reel 1 is turned in the opposite direction at least by a rotational angle corresponding to the locking path.

## Claims

1. A method for determining the load acting on a vehicle occupant restrained by a seat belt, in which measurement signals from occupant restraint device sensors are evaluated in an evaluating device, wherein the movement of the seat belt webbing influenced by the strapped-in vehicle occupant is scanned and a corresponding signal is fed to the evaluating device, **characterised in that** in addition to scanning of the webbing movement the rotating movement of a rotor is scanned, by which a torque generated by a drive is transmitted to the belt reel of the seat belt retractor and corresponding measurement data are supplied to the evaluating device and **in that** functions of components of the seat belt system with which the vehicle occupant is strapped in are diagnosed or monitored from the measurement data relating to webbing movement and rotor movement.

2. A method according to claim 1, **characterised in that** the rotating movement of the belt reel is scanned and the functions of components of the seat belt system with which the vehicle occupant is strapped in are diagnosed or monitored from the measurement data relating to the rotating movements of the belt reel and rotor.

3. A method according to one of claims 1, **characterised in that** the severity of the crash is determined upon evaluation of the measurement signals representing the belt extraction movement.

4. A method according claim 1 or 3, **characterised in that** at least one safety device of the occupant restraint system is activated as a function of the measurement signal and/or the result determined upon evaluation.

5. A method according to one of claims 1 to 4, **characterised in that** the measurement signal and/or the result obtained from evaluation of the measurement signal is compared with at least one corresponding threshold value and at least one safety device of the occupant restraint system is activated if the threshold value is reached or exceeded.

6. A method according to one of claims 1 to 5, **characterised in that** the information obtained from the measurement data and/or the result determined from evaluation of the measurement data is retrieved or passed on by telecommunication.

7. A method according to one of claims 1 to 6, **characterised in that**, after strapping in, the length of extracted webbing is measured as a reference variable.

8. A method according to claim 7, **characterised in that** the strapped-in occupant may be detected as being out of position (OOP) from a length of extracted webbing exceeding the reference variable.

9. A method according to one of claims 1 to 8, **characterised in that** positioning of the vehicle seat occupied by the occupant in the vehicle and the length of extracted webbing, in particular the reference variable for the length of extracted webbing, are measured and safety devices of the occupant restraint system are adjusted as a function of these measured values.

10. A vehicle occupant restraint system for a vehicle with a belt retractor (3) for a seat belt (15), a tightener drive (14), the drive moment of which may be transmitted by a rotor (2) to the belt reel (1) of the belt retractor (13), wherein a rotational angle sensor (6) for scanning the rotational angle of the rotor (2) is provided and measurement data from the rotational angle sensor (6) are supplied to an evaluating device (3), **characterised in that** an additional rotational angle sensor (5) for scanning the rotational angle of the belt reel (1) is provided and the evaluating device (3) performs a diagnosis of the operation of the belt retractor (13) by evaluating the measurement data supplied by the two rotational angle sensors (5, 6).

## Patentansprüche

1. Verfahren zum Bestimmen der Belastung, die auf einen durch einen Sicherheitsgurt zurückgehaltenen Fahrzeuginsassen wirkt, bei dem Meßsignale von Sensoren einer Insassenrückhaltevorrichtung in einer Auswerteeinrichtung ausgewertet werden, wobei die durch den angegurteten Fahrzeuginsassen beeinflußte Bewegung des Sicherheitsgurtbandes abgetastet und ein entsprechendes Signal der Auswerteeinrichtung zugeleitet wird, **dadurch gekennzeichnet, daß** zusätzlich zum Abtasten der Bandbewegung die Drehbewegung eines Rotors abgetastet wird, durch den ein durch einen Antrieb erzeugtes Drehmoment auf die Gurtspule des Sicherheitsgurtaufrollers übertragen wird, und entsprechende Meßdaten der Auswerteeinrichtung zugeführt werden, und daß Funktionen von Bauteilen des Sicherheitsgurtsystems, mit dem der Fahrzeuginsasse angegurtet ist, aus dem Meßdaten, die sich auf die Bandbewegung und die Rotorbewegung beziehen, diagnostiziert oder überwacht werden.

2. Verfahren nach Anspruch 1, **dadurch gekennzeichnet, daß** die Drehbewegung der Gurtspule abgetastet wird und die Funktionen von Bauteilen des Sicherheitsgurtsystems, mit dem der Fahrzeuginsasse angegurtet ist, aus dem Meßdaten, die sich auf die Drehbewegungen der Gurtspule und des Rotors beziehen, diagnostiziert oder überwacht werden.

3. Verfahren nach Anspruch 1, **dadurch gekennzeichnet, daß** die Schwere des Unfalls bei Auswertung der die Gurtauszugsbewegung wiedergebenden Meßsignale bestimmt wird.

4. Verfahren nach Anspruch 1 oder 3, **dadurch gekennzeichnet, daß** wenigstens eine Sicherheitseinrichtung des Insassenrückhaltesystems in Abhängigkeit von dem Meßsignal und/oder dem bei der Auswertung bestimmten Ergebnis aktiviert wird.

5. Verfahren nach einem der Ansprüche 1 bis 4, **dadurch gekennzeichnet, daß** das Meßsignal und/oder das aus der Auswertung des Meßsignals gewonnene Ergebnis mit wenigstens einem entsprechenden Schwellenwert verglichen wird und wenigstens eine Sicherheitseinrichtung des Insassenrückhaltesystems aktiviert wird, falls der Schwellenwert erreicht oder überschritten wird.

6. Verfahren nach einem der Ansprüche 1 bis 5, **dadurch gekennzeichnet, daß** die aus den Meßdaten und/oder dem aus der Auswertung der Meßdaten bestimmten Ergebnis gewonnene Information durch Telekommunikation abgerufen oder weitergegeben wird.

7. Verfahren nach einem der Ansprüche 1 bis 6, **dadurch gekennzeichnet, daß** nach dem Angurten die Bandauszugslänge als eine Bezugsgröße gemessen wird.

8. Verfahren nach Anspruch 7, **dadurch gekennzeichnet, daß** der angegurtete Insasse aus einer die Bezugsgröße überschreitenden Bandauszugslänge als außer Position (out of position - OOP) erfaßt werden kann.

9. Verfahren nach einem der Ansprüche 1 bis 8, **dadurch gekennzeichnet, daß** die Positionierung des durch den Insassen im Fahrzeug belegten Fahrzeugsitzes und die Bandauszugslänge, insbesondere die Bezugsgröße für die Bandauszugslänge, gemessen werden und Sicherheitseinrichtungen des Insassenrückhaltesystems in Abhängigkeit von diesen gemessenen Werten eingestellt werden.

10. Fahrzeuginsassenrückhaltesystem für ein Fahrzeug mit einem Gurtaufroller (13) für einen Sicherheitsgurt (15), einem Strafferantrieb (14), dessen Drehmoment durch einen Rotor (2) auf die Gurtspule (1) des Gurtaufrollers (13) übertragen werden kann, wobei ein Drehwinkelsensor (6) zum Abtasten des Drehwinkels des Rotors (2) bereitgestellt wird und Meßdaten vom Drehwinkelsensor (6) einer Auswerteeinrichtung (3) zugeleitet werden, **dadurch gekennzeichnet, daß** ein zusätzlicher Drehwinkelsensor (5) zum Abtasten des Drehwinkels der Gurtspule (1) bereitgestellt wird und die Auswerteeinrichtung (3) durch Auswerten der durch die zwei Drehwinkelsensoren (5, 6) gelieferten Meßdaten eine Diagnose des Betriebs des Gurtaufrollers (13) durchführt.

## Revendications

1. Procédé de détermination de la charge agissant sur l'occupant d'un véhicule retenu par une ceinture de sécurité, les signaux de mesure émis par les capteurs du dispositif de retenue de l'occupant étant évalués dans un dispositif d'évaluation, le déplacement de la sangle de la ceinture de sécurité influencé par l'occupant du véhicule portant la ceinture étant balayé et un signal correspondant étant transmis au dispositif d'évaluation, **caractérisé en ce qu'**en plus du balayage du déplacement de la sangle, le déplacement par rotation d'un rotor est balayé, ce rotor transmettant un couple produit par un dispositif d'entraînement à la bobine de la ceinture de l'enrouleur de la ceinture de sécurité, des données de mesure correspondantes étant transmises au dispositif d'évaluation, les fonctions des composants du système de ceinture de sécurité retenant l'occupant du véhicule étant diagnostiquées et surveillées sur la base des données de mesure concernant le déplacement de la ceinture et le déplacement du rotor.

2. Procédé selon la revendication 1, **caractérisé en ce que** le déplacement par rotation de la bobine de la ceinture est balayé, les fonctions des composants du système de ceinture de sécurité retenant l'occupant du véhicule étant diagnostiquées ou surveillées sur la base des données de mesure concernant les déplacements par rotation de la bobine de la ceinture et du rotor.

3. Procédé selon l'une des revendications 1 ou 2, **caractérisé en ce que** la gravité de la collision est déterminée lors de l'évaluation des signaux de mesure représentant le déplacement d'extraction de la ceinture.

4. Procédé selon les revendications 1 ou 3, **caractérisé en ce qu'**au moins un dispositif de sécurité du système de retenue de l'occupant est actionné sur la base du signal de mesure et/ou du résultat déterminé lors de l'évaluation.

5. Procédé selon l'une des revendications 1 à 4, **caractérisé en ce que** le signal de mesure et/ou le résultat de l'évaluation du signal de mesure sont comparés avec au moins une valeur de seuil correspondante, au moins un dispositif de sécurité du système de retenue de l'occupant étant actionné lors de l'atteinte ou du dépassement de la valeur de seuil.

6. Procédé selon l'une des revendications 1 à 5, **caractérisé en ce que** les informations concernant les données de mesure et/ou le résultat déterminé sur la base de l'évaluation des données de mesure sont extraites ou transmises par télécommunication.

7. Procédé selon l'une des revendications 1 à 6, **caractérisé en ce que**, après l'application de la ceinture, la longueur d'extraction de la sangle est mesurée comme variable de référence.

8. Procédé selon la revendication 7, **caractérisé en ce qu'**un état hors de position (OOP) de l'occupant portant la ceinture peut être détecté si la longueur d'extraction de la sangle dépasse la variable de référence.

9. Procédé selon l'une des revendications 1 à 8, **caractérisé en ce que** le positionnement du siège du véhicule occupé par l'occupant du véhicule et la longueur d'extraction de la sangle, en particulier la variable de référence de la longueur d'extraction de la sangle, sont mesurés, des dispositifs de sécurité du système de retenue de l'occupant étant ajustés sur la base de ces valeurs de mesure.

10. Système de retenue de l'occupant d'un véhicule, comportant un enrouleur (13) de la ceinture de sécurité (15) un dispositif d'entraînement de serrage (14), dont le couple d'entraînement peut être transmis par un rotor (2) à la bobine de la ceinture (1) de l'enrouleur de la ceinture (13), comportant un capteur de l'angle de rotation (6), destiné à balayer l'angle de rotation du rotor (2), les données de mesure fournies par le capteur de l'angle de rotation (6) étant transmises vers un dispositif d'évaluation (3), **caractérisé par** un capteur additionnel de l'angle de rotation (5), destiné à balayer l'angle de rotation de la bobine de la ceinture (1), le dispositif d'évaluation (3) établissant un diagnostic du fonctionnement de l'enrouleur de la ceinture (13) en évaluant les données de mesure transmises par les deux capteurs de l'angle de rotation (5, 6).
